# EUROPEAN PATENT APPLICATION

(11) **EP 4 611 328 A1**
(43) Date of publication of application: **03.09.2025**
(21) Application number: 23909075.6
(22) Date of filing: 29.06.2023
(51) Int. Cl.: H04L 41/0246

(54) **MESSAGE PROCESSING METHOD, STORAGE MEDIUM AND ELECTRONIC APPARATUS**

(30) Priority: 28.12.2022 CN 202211698850
(71) Applicant: ZTE CORPORATION, Shenzhen, Guangdong 518057 (CN)
(72) Inventor: DING, Liang, Shenzhen, Guangdong 518057 (CN); SUN, Xiaowei, Shenzhen, Guangdong 518057 (CN)
(74) Representative: Carangelo, Pierluigi
(86) International application number: PCT/CN2023/104192
(87) International publication number: WO 2024/139131

(57) **Abstract**

Embodiments of the present disclosure provide a message processing method, a storage medium, and an electronic apparatus. The method comprises: receiving a first OMCI message sent by an OLT, wherein an equipment ID field of the first OMCI message carries class information of a target ONU that processes the first OMCI message; determining a target ONU according to the class information; in the case where the target ONU is a main ONU, directly processing the first OMCI message; in the case where the target ONU is a sub-ONU, acquiring the identification information of the sub-ONU from a new sub-ONU identifier Sub-ONU ID field added in the first OMCI message, forward the first OMCI message to the sub- ONU according to the identification information of the sub-ONU so as to process the first OMCI message by the sub-ONU, the problem in the related art that when sub-ONUs are deployed on a large scale, many sub-ONUs cannot be managed and controlled by an FTTR main-sub ONU management solution can be solved, the main ONU or the sub-ONU is determined to process the message according to the class information carried in the device ID field, and the sub-ONU ID information is identified by adding an OMCI message field, this implements management and control over large-scale sub-ONUs.

## Description

### Cross-Reference to Related Application

This disclosure is based on Chinese Patent Application CN 202211698850.4, filed with the Chinese Patent Office on 28 December 2022 and entitled "Message processing method, storage medium and electronic apparatus", and claims priority to the Chinese Patent Application, the disclosure of which is incorporated herein by reference in its entirety.

### Technical Field

Embodiments of the present disclosure relate to the field of network communications, and in particular, to a message processing method, a storage medium, and an electronic apparatus.

### Background

Existing home optical fiber networks are usually based on FTTB (Fiber To The Building) and FTTH (Fiber To The Home), both of which implement high-rate access by arranging an ONU in a user home through optical fibers. With the development of technology, more and more users choose more intelligent terminals to access the network. The drawback of the limited number of FTTH/FTTB access terminals is gradually exposed. In order to solve the problem that the number of FTTH/FTTB access terminals is limited, a network service provider proposes an FTTR (Fiber To The Room) wiring solution, which solves the problem that the number of access terminals is limited by adding a sub-gateway. The FTTR technology refers to a networking technology in which an optical fiber is used to replace a network cable, the optical fiber is laid to each room on the basis of an FTTB and an FTTH, an optical network terminal is deployed, interconnection with a home gateway is realized, and dual-frequency Wi-Fi is combined, thereby guaranteeing the coverage of an entire home network.

To implement the FTTR solution, it is required to configure a main-sub gateway in a user home. An optical fiber is deployed from an entrance home distribution box (i.e. an FTTR main gateway ONU) to each room (a follower gateway) inside a home to replace a traditional copper-cable-based Ethernet cable, and enters each room through the optical fiber, so that wired and wireless service interfaces are provided, thereby realizing coverage of a whole home gigabit network. An Optical Network Unit (ONU for short) of an FTTR is connected to an Optical Line Terminal (OLT for short) device of a central office of an operator through a PON, and is connected to each secondary gateway through a Passive Optical Network (PON for short) port of an internal OLT module of the primary gateway. The FTTR main gateway ONU is used as an ONU device, and the PON port is used as an ONU device (i.e. a sub-gateway) similar to a traditional OLT device. The main-sub ONUs are both visible to the OLT device, and the operator can manage and control the main-sub ONUs by issuing a management and control message through the OLT device.

In a management and control solution of an FTTR main-sub ONU in the related art, identification information about an ONU (Sub-ONU) is usually added to a device ID field of an OMCI protocol, and a standard OMCI message is converted into a private OMCI message. In the OMCI protocol, the device ID field is split into two independent fields that represent the identifier of the main ONU and the identifier of the sub-ONU respectively. The device ID field of the OMCI protocol occupies one byte. When the OLT mounts a large number of ONUs, the implementation scheme of the main-sub ONUs splitting the device ID field will result in that the split device ID cannot completely represent all the ONU id information.

Aiming at the problem in the related art that when sub-ONUs are deployed on a large scale, many sub-ONUs cannot be managed and controlled by an FTTR main-sub ONU management and control solution, no solution has been proposed.

### Summary

Embodiments of the present disclosure provide a message processing method, a storage medium, and an electronic apparatus, so as to at least solve a problem in a management and control solution for an FTTR main-sub ONU in the related art that when sub-ONUs are deployed on a large scale, many sub-ONUs cannot be managed and controlled.

According to one example of the present disclosure, a message processing method is provided, which is applied to an optical network unit (ONU). The method comprises:
Receiving a first ONU management and Control Interface (OMCI) message sent by an Optical Line Terminal (OLT), wherein a device identification (ID) field of the first OMCI message carries class information of a target ONU for processing the first OMCI message;
Determining the class information as a second class ID indicating that the target ONU is a sub-ONU;
Acquiring an identification information of the sub-ONU from a new added Sub-ONU ID field of the first OMCI message, and forwarding the first OMCI message to the sub-ONU according to the identification information of the sub-ONU, so that the sub-ONU processes the first OMCI message.

According to another example of the present disclosure, also provided is a message processing method, which is applied to an optical line terminal (OLT). The method comprises:
Encapsulating a first ONU Management and Control Interface (OMCI) message, wherein a device identification (ID) field of the first OMCI message carries class information of a target Optical Network Unit (ONU) that processes the first OMCI message, and determining the class information as a second class ID indicating that the target ONU is a sub-ONU, and a new added Sub-ONU ID field in the first OMCI message carries identification information of the sub-ONU;
And sending the first OMCI message to a main ONU, so that the main ONU sends the first OMCI message to the sub-ONU according to the class information, so that the sub-ONU processes the first OMCI message.

According to another example of the present disclosure, a message processing apparatus is also provided, which is applied to an optical network unit (ONU). The apparatus comprises:
A first receiving module, configured to receive a first optical network management control interface OMCI message sent by an optical line terminal OLT, wherein a device ID field of the first OMCI message carries class information of a target ONU that processes the first OMCI message;
A first determining module, configured to determine the class information as a second class ID indicating that the target ONU is a sub-ONU;
A forwarding module, configured to acquire a identification information of the sub-ONU from a new sub-ONU identifier Sub-ONU ID field of the first OMCI message, and forward the first OMCI message to the sub-ONU according to the identification information of the sub-ONU, so that the sub-ONU processes the first OMCI message.

According to another example of the present disclosure, a message processing apparatus is also provided, which is applied to an optical line terminal (OLT). The apparatus comprises:
An encapsulating module, configured to encapsulate a first optical network management control interface OMCI message, wherein a device ID field of the first OMCI message carries class information of a target optical network unit (ONU) that processes the first OMCI message; send the first OMCI message to the secondary ONU, and a new sub-ONU identifier Sub-ONU ID field in the first OMCI message carries identification information of the sub-ONU;
And a first sending module, configured to send the first OMCI message to a main ONU, so that the main ONU sends the first OMCI message to the sub-ONU according to the class information, so that the sub-ONU processes the first OMCI message.

According to another example of the present disclosure, a computer-readable storage medium is further provided. The storage medium stores a computer program, wherein the computer program is configured to execute the steps in any one of the method embodiments when running.

According to another example of the present disclosure, also provided is an electronic apparatus, comprising a memory and a processor, wherein the memory stores a computer program, and the processor is configured to run the computer program so as to execute the steps in any one of the method examples.

### Brief Description of the Drawings

Fig. 1 is a first flowchart of a message processing method according to an embodiment of the present disclosure;
Fig. 2 is a flowchart II of a message processing method according to an embodiment of the present disclosure;
Fig. 3 is a schematic diagram of a main-sub device layout of an FTTR according to an embodiment of the present disclosure;
Fig. 4 is a schematic structural diagram of an OMCI message according to an embodiment of the present disclosure;
Fig. 5 is a first block diagram of a message processing device according to an embodiment of the present disclosure;
Fig. 6 is a second block diagram of a message processing device according to an embodiment of the present disclosure.

### Detailed Description of the Embodiments

Embodiments of the present disclosure will be described below in detail with reference to the accompanying drawings and in conjunction with the embodiments.

It should be noted that, terms such as "first" and "second" in the description, claims, and accompanying drawings of the present disclosure are used to distinguish similar objects, but are not necessarily used to describe a specific sequence or order.

The method examples provided in the examples of the present disclosure can be executed in a computer device or a similar arithmetic apparatus.

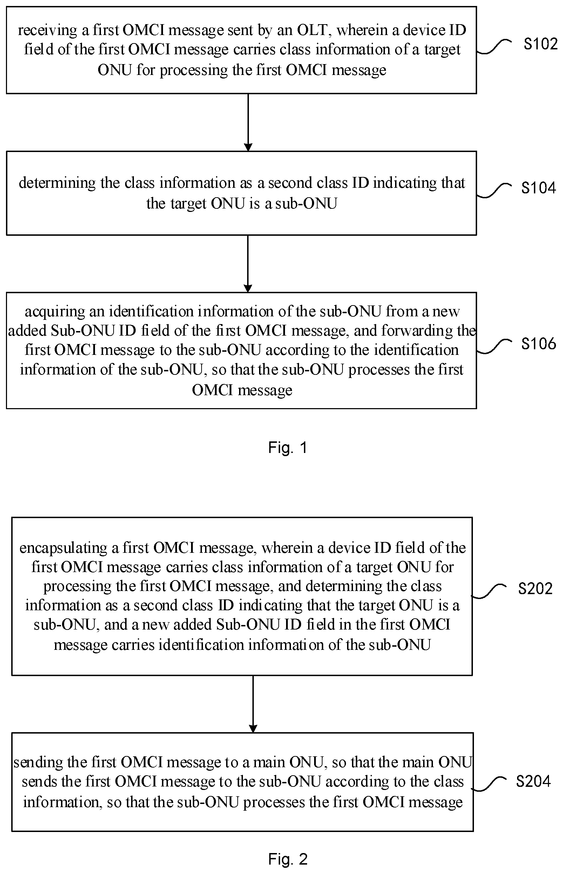

The present embodiment provides a message processing method running on the computer device, Fig. 1 is a first flowchart of a message processing method according to an embodiment of the present disclosure, as shown in Fig. 1, the method is applied to an optical network unit (ONU), and the method comprises the following steps:
At Step S102, receiving a first OMCI message sent by an OLT, wherein an equipment ID field of the first OMCI message carries class information of a target ONU that processes the first OMCI message;
At Step S104, determining the class information to be a second class ID indicating that the target ONU is a sub-ONU;
At Step S106, acquiring a identification information of the sub-ONU from a new sub-ONU identifier Sub-ONU ID field of the first OMCI message, and forwarding the first OMCI message to the sub-ONU according to the identification information of the sub-ONU, so that the sub-ONU processes the first OMCI message.

By means of steps S202 to S208, the problem in the related art that when sub-ONUs are deployed on a large scale, management and control of an FTTR main-sub ONU cannot be managed and controlled by means of the solution of management and control of the FTTR main-sub ONUs can be solved. Whether a message to be processed is a main ONU or a sub-ONU is determined according to category information carried in a device ID field, and ID information about the sub-ONU is identified by adding an OMCI message field, thereby realizing management and control of the large-scale sub-ONUs.

In an embodiment, the class information is determined to be a first class ID indicating that the target ONU is a main ONU, and the first class ID is different from the second class ID; that is, in the case that the class information is the first class ID, and the main ONU directly processes the first OMCI message.

In an embodiment, in the step S206, the step of forwarding the first OMCI message to the sub-ONU includes: parsing a sub-ONU ID field of the first OMCI message to obtain and store the identification information of the sub-ONU; according to the identification information about the sub-ONU, modifying the device ID field of the first OMCI message from the second class ID to the first class ID, and deleting the Sub-ONU ID field information of the first OMCI message; forwarding the modified first OMCI message to the sub-ONU.

In an embodiment, the method further comprises: receiving a second OMCI message reported by the sub-ONU, wherein the second OMCI message carries alarm information generated by the sub-ONU and identifier information of the sub-ONU; and reporting the second OMCI message to an OLT according to the identifier information of the sub-ONU, so that the OLT processes the second OMCI message.

In an embodiment, the reporting the second OMCI message to the OLT according to the identifier information of the sub-ONU comprises: modifying a device ID field of the second OMCI message from the first class ID to the second class ID; adding a Sub-ONU ID field in the second OMCI message; encoding the identifier information of the sub-ONU and filling the encoded identifier information into the Sub-ONU ID field to obtain the modified second OMCI message; reporting the modified second OMCI message to the OLT.

In an embodiment, the identification information of the sub-ONU includes a slot number, the PON ID, and the ONU ID.

According to another example of the present disclosure, a message processing method is also provided, Fig.2 is a second flowchart of a message processing method according to an embodiment of the present disclosure, and as shown in Fig. 2, the method is applied to an OLT, and the method comprises the following steps:
At Step S202, encapsulate a first optical network management and control interface OMCI message, wherein an equipment ID field of the first OMCI message carries class information of a target ONU that processes the first OMCI message, and it is determined that the class information is a second class ID indicating that the target ONU is a sub-ONU, and a new sub-ONU identifier Sub-ONU ID field in the first OMCI message carries identifier information of the sub-ONU;
At Step S204, send the first OMCI message to the main ONU, so that the main ONU sends the first OMCI message to the sub-ONU according to the class information, so that the sub-ONU processes the first OMCI message.

By means of the steps S302 to S304, the problem in the related art that when an OLT mounts many ONUs, the management and control scheme of an FTTR main-sub ONU cannot manage and control many sub-ONUs can be solved. By means of determining whether a message to be processed is a main ONU or a sub-ONU according to category information carried in a device ID field, and identifying sub-ONU ID information by adding an OMCI message field, the management and control of a large-scale sub-ONU is realized.

In an embodiment, the method further comprises: determining that the class information is a first class ID indicating that the target ONU is the main ONU; and sending the first OMCI message to the main ONU, so as to process the OMCI message by means of the main ONU, wherein the first class ID is different from the second class ID.

In an embodiment, after sending the first OMCI message to the primary ONU, the method further comprises: receiving a second OMCI message sent by the primary ONU, wherein an identifier information of the secondary ONU is carried in an identifier field of the Sub-ONU newly added in the second OMCI message, and a second category identifier is carried in a device ID field of the second OMCI message; process the second OMCI message.

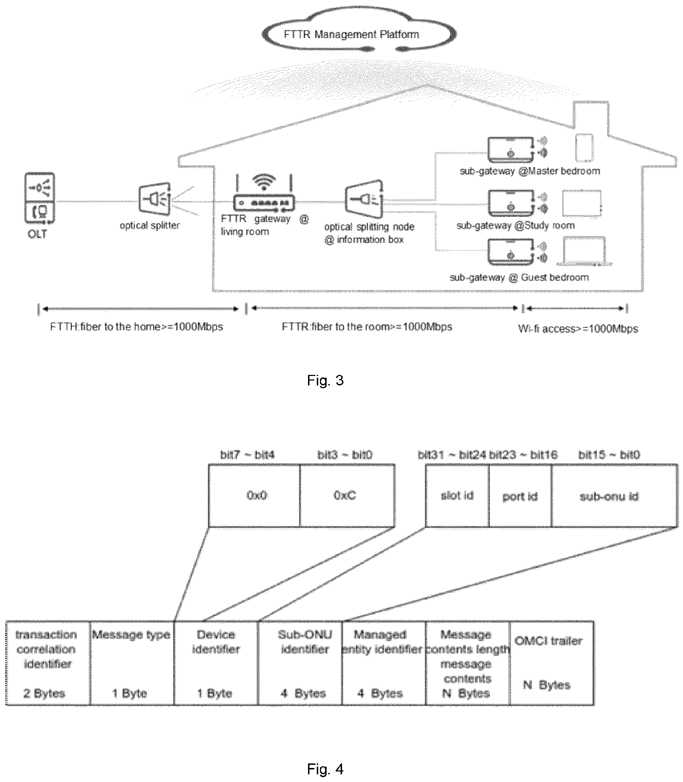

Fig. 3 is a schematic diagram of a main-sub device layout of an FTTR according to an embodiment of the present disclosure. As shown in Fig. 3, a sub- gateway is arranged in each room based on a main gateway, so as to implement whole-house optical fibre coverage; an operator issues a management and control command to an OLT device via an EMS northbound management system, the OLT device manages the main device and the sub-device under the current PON port through an Optical Management Control Interface (OMCI for short) protocol.

In order to manage a sub-ONU device, the definition of an OMCI message format is based on the G.988 standard, in which a device ID field value of 0x0A is used for identifying a standard OMCI message, a device ID value of 0x0B is used for identifying an extended (Extended) OMCI message, and the remaining is a reserved field value. In the present invention, the value of the device ID field is defined as 0x0C to identify that the current OMCI message is sent to the sub-ONU. A field is extended in the OMCI message to record the sub-ONU id (figure 2).

In this embodiment, the management control message sent by the OLT to the sub-ONU is forwarded to the sub-ONU after being processed by the main ONU. Specifically, when the OLT issues configuration information to the sub-ONU, the device ID field of the OMCI message header is filled as 0x0C (an example of the described second category identifier, the page can be other fields), and the location information of the sub-ONU is filled into the Sub-ONU identifier field, the Sub-ONU identifier field (i.e. the described Sub-ONU ID field) occupies 4 bytes, and it needs to be noted that the number of bytes is adjustable, and the length range is preferably 4 bytes. Bit0-bit15 is reserved for a sub-ONU ID, bit16-bit23 is used as a port ID to identify a PON port number of a primary ONU occupied by a secondary ONU, and bit24-bit31 is used to identify a slot number of the primary ONU occupied by the secondary ONU.

After receiving the OMCI message delivered by the OLT, the main ONU reads the device ID field. If the message is not a standard OMCI message (0x0A) or an extended OMCI message (0x0B) defined in the G.988 standard, the value of the device ID selected in this patent is 0x0C. After receiving the OMCI message, the main ONU first reads the device ID field. If the value of the device ID field is 0x0C, the current OMCI message is sent to the sub-ONU. The main ONU parses the message according to the value of the sub-ONU identifier field to obtain the location and the id of the sub-ONU. Deleting a sub-ONU identifier field in an OMCI message sent by an OLT, modifying a device ID field of the OMCI message to 0x0A, constructing a standard OMCI message, and forwarding the OMCI message to a corresponding secondary ONU according to the parsed position information of the secondary ONU, thereby realizing the management and control of the secondary ONU.

When generating alarm information from the ONU and reporting the alarm information to the OLT, the ONU encapsulates the alarm information into a standard OMCI message and reports the OMCI message to the main ONU. The main ONU fills the sub-ONU identifier field of the OMCI message in the sub-ONU position according to the reported information, and encodes and then fills the information such as the Port ID, the slot ID, and the ONU ID of the sub-ONU. Then, the device ID field is set to 0x0C. Then alarm information of the sub-ONU will be reported to the OLT.

The OLT issues the related configuration of the main ONU, and the main ONU can still follow the existing FTTH management and control solution when reporting the related information such as the alarm.

In the FTTR main-sub ONU management solution of the present example, the value of the device ID field is modified in the OMCI message to distinguish whether the object sending the current ONU message is a main ONU or a sub-ONU; by adding a sub-ONU identifier field, the slot number, port number and sub-ONU ID information occupied by the large-scale sub-ONU on the main ONU are used to manage and control the main and sub-ONUs respectively. In the FTTR main-sub ONU management solution of the present invention, management and control of a sub-ONU can be realized only by newly adding an OMCI message field; when an operator deploys an FTTR, it is only necessary to upgrade a main ONU; and an ONU in an existing network can be used as a sub-ONU, and the upgrade costs are relatively low.

In the scheme for managing and controlling FTTR main and sub-ONUs, a main ONU needs to be deployed, and at least one sub-ONU (Sub-ONU) needs to be deployed. The sub-ONU mounted under the PON port of the OLT is mounted under the primary ONU.

In order to implement the management and control of the above Sub-ONU, the OLT newly establishes an ME, and constructs a forwarding channel of the PON service layer.

Fig. 4 is a schematic structural diagram of an OMCI message according to an embodiment of the present disclosure. As shown in Fig. 4, class information of a target ONU is carried in bit7-bit0 of a device ID field, for example, the first class ID is 0x0, the second class ID is 0xC, bit7-bit4 carries 0x0, and bit3-bit0 carries 0xC, the sub-ONU ID of the Bytes is extended to carry the identification information of the sub-ONU, including slot ID, port ID and sub-ONU ID (sub-ONU ID), specifically, bit31-bit24 is used to carry the slot ID, bit23-bit16 is used to carry the port ID, and bit15-bit0 is used to carry the sub-ONU ID.

When a Sub-ONU goes online, the main ONU records the SN/password of the Sub-ONU and reports the SN/password to the OLT.

An OLT reports information about a sub-ONU via a PON Interface ME of a PON service layer; and the OLT creates a sub-ONU via the Sub ONU Control ME and performs authentication and authorization on the sub-ONU.

The OLT establishes a logical management channel of the Sub-ONU, initiates MIB synchronization for the Sub-ONU, and issues parameter configuration of a PON layer forwarding channel in an N: M mode to the Sub-ONU.

The OLT issues an OMCI message; after receiving the OMCI message, the main ONU reads the device ID field information of the OMCI message; if it is 0x0A, the current OMCI message is sent to the main ONU; and the main ONU performs direct processing.

If the value of the current OMCI message device ID field is 0x0C, it indicates that the current OMCI message is sent to the sub-ONU. The main ONU parses the sub-ONU identifier field of the OMCI message to obtain the information such as the slot ID, PON ID, and ONU ID in the OMCI message field, and stores the information.

The main ONU changes the device ID of the OMCI message to 0x0A according to the parsed slot ID, PON ID, and ONU ID information, and deletes the sub-ONU identifier field information in the OMCI message. The OMCI message is forwarded to the corresponding sub-ONU, so as to implement management and control of the sub-ONU by the OLT.

When the sub-ONU generates an alarm, an OMCI message carrying the alarm is reported to the main ONU, and the main ONU records a slot ID, a PON ID, and ONU ID information of the sub-ONU that generates the alarm. The main ONU changes the value of the device ID field in the OMCI message to 0x0C, adds a Sub-ONU identifier field in the OMCI message, encodes the slot ID of the ONU, the PON ID, and the ONU ID information, then fills the encoded slot ID, PON ID, and ONU ID information in the Sub-ONU identifier field, and reports the OMCI message to the OLT.

In the FTTR main-sub ONU management solution of the present embodiment, by adding a Sub-ONU field, the defect that when large-scale deployments of sub-ONUs are performed, the splitting of a device ID field is insufficient to identify position information about all the sub-ONUs, and the device ID field is insufficient to identify position information about all the sub-ONUs.

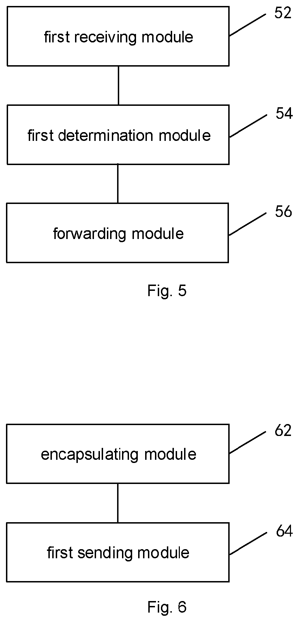

Another example of the present disclosure further provides a message processing apparatus, Fig.5 is a first block diagram of a message processing apparatus according to an embodiment of the present disclosure, and as shown in Fig. 5, the apparatus is applied to an ONU. The apparatus comprises:
A first receiving module 52, configured to receive a first optical network management control interface OMCI message sent by an optical line terminal OLT, where an equipment ID field of the first OMCI message carries class information of a target ONU that processes the first OMCI message;
A first determining module 54, configured to determine the class information as a second class ID for indicating that the target ONU is a sub-ONU;
And a forwarding module 56, configured to acquire the identifier information of the sub-ONU from a new sub-ONU identifier Sub-ONU ID field of the first OMCI message, and forward the first OMCI message to the sub-ONU according to the identifier information of the sub-ONU, so that the first OMCI message is processed by the sub-ONU.

In an embodiment, the apparatus further comprises:
A second determining module, configured to determine the class information to be a first class ID indicating that the target ONU is a main ONU, wherein the first class ID is different from the second class ID;
A processing module, configured to process the first OMCI message.

In an embodiment, the forwarding module 56 is further configured to parse the sub-ONU ID field of the first OMCI message to obtain and store the identifier information of the sub-ONU; according to the identification information about the sub-ONU, modifying the device ID field of the first OMCI message from the second category identifier to a first category identifier, and deleting the Sub-ONU ID field information about the first OMCI message; wherein the first class ID is different from the second class ID; forwarding the modified first OMCI message to the sub-ONU.

In an embodiment, the apparatus further comprises:
A second receiving module, configured to receive a second OMCI message reported by the sub-ONU, wherein the second OMCI message carries alarm information generated by the sub-ONU and identifier information of the sub-ONU;
And a reporting module, configured to report the second OMCI message to an OLT according to the identifier information of the sub-ONU, so that the OLT processes the second OMCI message.

In an embodiment, the reporting module is further configured to modify a device ID field of the second OMCI message from a first class ID to a second class ID, wherein the first class ID is different from the second class ID; adding a Sub-ONU ID field in the second OMCI message; encoding the identifier information of the sub-ONU and filling the encoded identifier information into the Sub-ONU ID field to obtain the modified second OMCI message; reporting the modified second OMCI message to the OLT.

In an embodiment, the identification information of the sub-ONU includes a slot number, the PON ID, and the ONU ID.

Another embodiment of the present disclosure further provides a message processing apparatus, Fig. 6 is a second block diagram of the message processing apparatus according to an embodiment of the present disclosure, and as shown in Fig. 6, the apparatus is applied to an OLT, and the apparatus comprises:
An encapsulating module 62, configured to encapsulate a first optical network management control interface OMCI message, wherein a device ID field of the first OMCI message carries category information of a target optical network unit (ONU) that processes the first OMCI message, determining that the class information is a second class ID indicating that the target ONU is a sub-ONU, wherein a newly added sub-ONU identifier Sub-ONU ID field in the first OMCI message carries the identifier information of the sub-ONU;

The first sending module 64 is configured to send the first OMCI message to a main ONU, so that the main ONU sends the first OMCI message to the sub-ONU according to the class information, so that the sub-ONU processes the first OMCI message.

In an embodiment, the apparatus further comprises:
And a second sending module, configured to: if the class information is determined as a first class ID indicating that the target ONU is the main ONU, send the first OMCI message to the main ONU, so as to process the OMCI message by means of the main ONU, wherein the first class ID is different from the second class ID.

In an embodiment, the apparatus further comprises:
A third receiving module, configured to receive a second OMCI message sent by the main ONU, wherein an identifier information of the sub-ONU is carried in a newly added Sub-ONU ID field in the second OMCI message, and the second category identifier is carried in a device ID field in the second OMCI message;
A second processing module, configured to process the second OMCI message.

Embodiments of the present disclosure also provide a computer readable storage medium. The computer readable storage medium stores a computer program, wherein the computer program is configured to execute the steps in any one of the described method embodiments during running.

In an exemplary embodiment, the computer readable storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

Embodiments of the present disclosure further provide an electronic apparatus, comprising a memory and a processor. The memory stores a computer program. The processor is configured to run the computer program to execute steps in any one of the method embodiments.

In an exemplary embodiment, the electronic apparatus can further comprise a transmission device and an input/output device, wherein the transmission device is connected to the processor, and the input/output device is connected to the processor.

For specific examples in this example, reference may be made to the examples described in the foregoing examples and exemplary examples, and details are not repeatedly described in this example.

Obviously, those skilled in the art should understand that each module or each step of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

## Claims

1. A message processing method, applied to an Optical Network Unit ,ONU, the method comprising:
receiving a first ONU Management and Control Interface ,OMCI, message sent by an Optical Line Terminal ,OLT, wherein a device identification ,ID, field of the first OMCI message carries class information of a target ONU for processing the first OMCI message;
determining the class information as a second class ID indicating that the target ONU is a sub-ONU;
acquiring an identification information of the sub-ONU from a new added Sub-ONU ID field of the first OMCI message, and forwarding the first OMCI message to the sub-ONU according to the identification information of the sub-ONU, so that the sub-ONU processes the first OMCI message.

2. The method according to claim 1, wherein the method further comprises:
determining that the class information is a first class ID indicating that the target ONU is a main ONU, wherein the first class ID is different from the second class ID;
the main ONU processes the first OMCI message.

3. The method according to claim 1, wherein forwarding the first OMCI message to the sub-ONU comprises:
parsing the Sub-ONU ID field of the first OMCI message to obtain and store the identification information of the sub-ONU;
according to the identification information of the sub-ONU, modifying the device ID field of the first OMCI message from the second class ID to a first class ID, and deleting information of the Sub-ONU ID field of the first OMCI message; wherein the first class ID is different from the second class ID;
forwarding the modified first OMCI message to the sub-ONU.

4. The method according to claim 1, wherein the method further comprises:
receiving a second OMCI message reported by the sub-ONU, wherein the second OMCI message carries alarm information generated by the sub-ONU and identification information of the sub-ONU; and
reporting the second OMCI message to the OLT according to the identification information of the sub-ONU, so that the OLT processes the second OMCI message.

5. The method according to claim 4, wherein the reporting the second OMCI message to the OLT according to the identification information of the sub-ONU comprises:
modifying the device ID field of the second OMCI message from a first class ID to the second class ID; wherein the first class ID is different from the second class ID;
adding a Sub-ONU ID field in the second OMCI message;
encoding the identification information of the sub-ONU and filling the encoded identification information into the Sub-ONU ID field to obtain the modified second OMCI message;
reporting the modified second OMCI message to the OLT.

6. The method according to any of claims 1 to 5, wherein,
the identification information of the sub-ONU comprises a slot ID, a PON ID, and the ONU ID.

7. A message processing method, applied to an Optical Line Terminal ,OLT, the method comprising:
encapsulating a first ONU Management and Control Interface ,OMCI, message, wherein a device identification ,ID, field of the first OMCI message carries class information of a target Optical Network Unit ,ONU, for processing the first OMCI message, and determining the class information as a second class ID indicating that the target ONU is a sub-ONU, and a new added Sub-ONU ID field in the first OMCI message carries identification information of the sub-ONU;
sending the first OMCI message to a main ONU, so that the main ONU sends the first OMCI message to the sub-ONU according to the class information, so that the sub-ONU processes the first OMCI message.

8. The method according to claim 7, wherein the method further comprises:
determining that the class information is a first class ID for indicating that the target ONU is the main ONU, and sending the first OMCI message to the main ONU, so that the main ONU processes the OMCI message, wherein the first class ID is different from the second class ID.

9. The method according to claim 7, wherein after sending the first OMCI message to a main ONU, the method further comprises:
receiving a second OMCI message sent by the main ONU, wherein a new added Sub-ONU ID field in the second OMCI message carries the identification information of the sub-ONU, and a device ID field of the second OMCI message carries the second class ID;
processing the second OMCI message.

10. A computer-readable storage medium, wherein the storage medium stores a computer program, and the computer program is configured to, when executed by a processor, perform the method as claimed in any one of claims 1 to 6 and 7 to 9.

11. An electronic apparatus, comprising a memory and a processor, wherein the memory stores a computer program, and the processor is configured to execute the computer program to perform the method as claimed in any one of claims 1 to 6 and 7 to 9.
